# EUROPEAN PATENT APPLICATION

(11) **EP 0 801 254 A1**
(43) Date of publication of application: **15.10.1997**
(21) Application number: 97103177.8
(22) Date of filing: 27.02.1997
(51) Int. Cl.: F16J 15/20

(54) **Preferred orientation sealing material**

(30) Priority: 13.03.1996 GB 9605249
(71) Applicant: Flexitallic Sealing Materials Ltd, Manchester M17 1RA (GB)
(72) Inventor: Hoyes, John Robert, Littleborough, Lancashire OL15 9NW (GB); Woolfenden, Stephen, Rochdale, Lancashire OL12 0RN (GB)
(74) Representative: Moffat, John Andrew

(57) **Abstract**

A method and material are described for a PTFE based sealing material, the material comprising a PTFE matrix having therein a filler of a platelet type mineral lubricant wherein the place of the mineral platelet particles are orientated substantially parallel to a rubbing surface of said material.

## Description

The present invention relates to a plastics material for sealing applications having a bearing surface, the material having a strengthening filler therein in a preferred orientation.

Within the valve industry there is great concern about the friction generated by valve stem seals. This is due to the fact that if the friction against the valve stem shaft is high, the capability or power of the actuator needed to open and close the valve will be larger than necessary thus being more expensive and also occupying more space which may be an important factor in certain applications.

Up to about 250°C it is usual practice to employ so called chevron seals made from polytetrafluoroethylene (PTFE). PTFE has a very low coefficient of friction and suffers from the undesirable characteristic of stick/slip friction to a very limited extent in comparison with other sealing materials. However, although PTFE has a low coefficient of friction, in the unfilled form it has low wear resistance. Above about 250°C it is usual practice to move from PTFE chevron-type seals to forms of so-called blocked graphite rings due to the relatively high rate or creep relaxation of PTFE above 250°C. However, relative to PTFE, blocked graphite has a high coefficient of friction which consequently necessitates the use of larger valve stem actuators for applications above about 250°C.

It is possible to employ fillers in PTFE which improve strength, wear and creep resistance and also, to an extent, the temperature capability. However, in general as the level of filler increases, so does the friction coefficient of the PTFE material so formed.

The most creep resistance forms of PTFE at elevated temperatures are biaxially orientated PTFE with high levels of filler addition.

It is an object of the present invention to provide a sealing material which has the desirable frictional characteristics of PTFE but is also able to be used in applications in excess of 250°C without excessive relaxation and creep thereof.

According to a first aspect of the present invention there is provided a sealing material for use in bearing applications, the filler material comprising a PTFE matrix having therein a filler of a platelet type mineral lubricant wherein the plane of the mineral platelet particles are orientated substantially parallel to a rubbing surface of said material.

In order not to increase the friction coefficient to undesirable levels, it is desirable to use a lubricative filler system based on plate minerals such as graphite and talc for example. However, these plate minerals are only lubricative when the plane of the plate particles is parallel to the surface that needs to be lubricated, ie parallel to the rotational and/or rubbing direction of a co-operating shaft or surface.

The sealing material may include filler contents up to and in excess of 50 wt% of the plate type lubricants comprising at least one of talc, graphite and any other plate type lubricant filler material.

The sealing material may be provided in the form of a substantially solid cylinder or in the form of a tube. In both cases, the orientation of the mineral platelet particles may be substantially parallel to both the axial and circumferential directions.

The high filler content possible with the sealing material of the present invention allows PTFE seals to be used at temperatures in excess of 250°C whilst still retaining a low coefficient of friction and hence the ability to employ smaller valve actuators than would otherwise be the case.

The material according to the present invention, in addition to the plate mineral filler having a preferred particle orientation, may also include further reinforcements therein running substantially in the circumferential direction in a spiral form.

Such reinforcements may comprise for example, metal foils, woven wire cloths, expanded meshes, textile-type materials formed from natural or plastics material fibres or yarns or other particulate fillers of a non-platelet type such as metals, including lead, tin, antimony, bismuth, zinc, alloys including: bronze; brass; copper-based alloys; nickel-based alloys; and aluminium-based alloys for example.

Seals may be machined from the material according to the present invention such that the orientation of the plane or the platelets will be substantially parallel to the shaft surface rubbing direction, ie, they will be in an ideal orientation for lubrication purposes.

The material of the present invention may be used for seals requiring wear resistance to sliding motion, including linear, reciprocating and rotational.

According to a second aspect of the present invention there is provided a method of making a sealing material having a platelet type mineral filler therein wherein the orientation of the plane of the platelet filler is substantially parallel to a rubbing surface of said material, the method comprising the steps of making an elongate sheet or tape of PTFE, having said filler material therein, by a calendering and/or extrusion process so as to naturally orientate said platelet filler particles substantially parallel to the place of said PTFE sheet, winding said elongate sheet into a cylindrical form and sintering said wound cylindrical form so as to produce a substantially homogeneous material.

The cylindrical form may be solid or preferably tubular.

The production of the elongate sheet or tape may be accomplished by a method such as used to produce PTFE tape for thread sealing, ie plumbers tape. PTFE powder is blended with the selected filler and lubricant such as kerosene and a tape formed by a combination of extrusion and calendering, the tape then being heated to remove the kerosene lubricant. Alternatively, the mixture can be directly calendered to produce a roll which can then be slit and dried to form the required elongate sheet or tape.

Prior to sintering, the wound cylindrical form may first be compressed so as to remove any porosity such as air pockets or voids. Such compression may be conventional uniaxial or biaxial compaction in a closed rigid die or may comprise isostatic pressing.

The winding step may be carried out under vacuum so as to obviate the inclusion of trapped air bubbles or pockets. Various additional reinforcing materials such as those listed hereinabove may be included in the production method, the additional reinforcing materials comprising for example, a woven bronze mesh which may be wound with the PTFE sheet so as to form a continuous spiral of the bronze mesh material throughout the PTFE matrix.

The sintering step may be carried out at 380°C which is common for PTFE-based materials. Furthermore, the sintering step may be carried out under vacuum. Any desired method of heating may be employed.

Various additional platelet or non-platelet type particulate fillers may be included in the method of manufacture by inclusion in the manufacture of the initial PTFE base sheet material produced or may be included by distribution on the sheet material during winding of the cylindrical form. Such particulate filler materials as are listed hereinabove may be employed as appropriate.

It is preferred that the platelet type lubricative filler material comprises relatively large flakes having a relatively low surface area to volume ratio. An example of such a material which may be used is Mistron CF5A (trade mark) made by Luzenac N.V. This material has a particle size where 100% passes through a 100µm mesh and a surface area of 8m²/gm.

In order that the present invention may be more fully understood, an example will now be described by way of illustration only with reference to the accompanying drawings, of which:
Figure 1 shows a schematic cross section transverse to a winding direction of a cylinder of a material according to the present invention;
Figure 2 shows a schematic representation of an axial end view of a cylinder of a material according to the present invention being wound from a sheet;
Figure 3 shows a schematic cross section through the axis of a tube of the material of the present invention being compacted axially in a die; and
Figure 4 which shows a schematic representation of a cylinder of a bearing material according to the present invention being isostatically compacted.

Referring now to the drawings and where the same or similar features are denoted by common reference numerals.

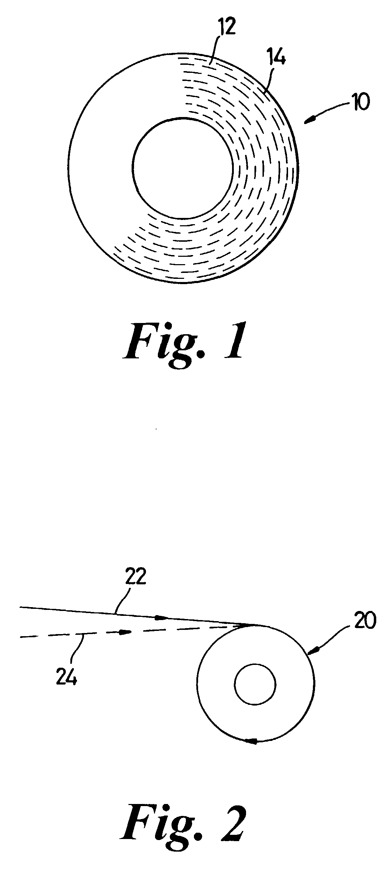

Figure 1 shows a schematic cross section normal to the axis of a tubular cylinder 10 of seal material according to the present invention. The material comprises a PTFE matrix 12 having therein platelet particles 14 of graphite filler material with the place of the particles substantially parallel to the axial and circumferential directions, the axial direction being normal to the plane of the drawing.

Figure 2 shows a similar cylinder 20 of seal material to that shown in Figure 1 being formed. A sheet 22 of PTFE is wound into a cylinder 20. The sheet 22 is formed by a method used to produce PTFE tape for thread sealing, ie plumbers tape. PTFE powder is blended with the selected filler and lubricant such as kerosene and a tape formed by a combination of extrusion and calendering, the tape then being heated to remove the kerosene lubricant. Alternatively, the mixture can be directly calendered to produce a roll which can then be slit and dried to form the required elongate sheet or tape. An additional reinforcement such as a sheet of woven brass cloth, for example, may also be incorporated by winding with the PTFE sheet 22 and as indicated at 24 by the dashed line.

The composition of the PTFE tape as produced above was PTFE 37.8 wt%; Kerosene 9.5 wt%; and, talc 52.7 wt% of Mistron CF5A (trade mark).

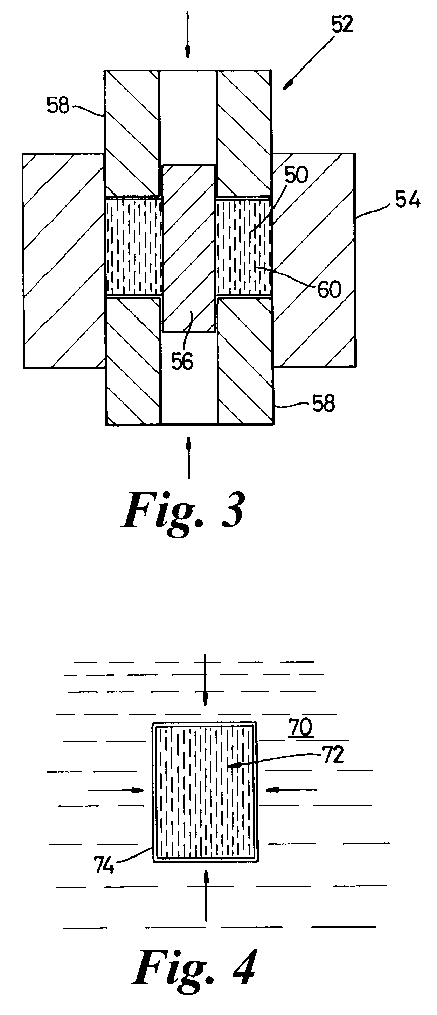

Figure 3 shows a cylinder 50 of PTFE-based seal material produced according to the procedure described above with regard to Figure 2. The cylinder 50 is axially compacted by double-ended pressing in a die assembly 52 comprising an outer die member 54, an inner die member 56 and two cylindrical punches 58. The degree of compaction is very small and insufficient to substantially upset the orientation of the platelet filler particles 60.

Figure 4 shows an alternative method of compaction utilising isostatic compaction under a fluid 70 of a cylinder of seal material 72. Under isostatic compaction, pressure is applied equally to all surfaces and consequently, there is also a degree of compaction in the radial direction so as to compact any voids which may have been formed during winding. The pressure may be applied via a flexible; sealed non-permeable membrane 74 as shown in the Figure.

The wound and compacted cylinders 10, 20, 50, 72 may be sintered at 380°C by the following schedule:
1. RT - 335°C in 2 hours
2. 335°C - 350°C in 12 hours
3. 350°C - 380°C in 1 hour 20 mins
4. 380°C for 3 hours 30 mins. DWELL
5. 380°C - 300°C in 3 hours
6. 300°C for 3 hours. DWELL
7. 300°C - RT in 3 hours

## Claims

1. A sealing material for bearing applications, the material comprising a PTFE matrix having therein a filler of a platelet-type mineral lubricant wherein the plane of the mineral platelet particles is orientated substantially parallel to a rubbing surface of said material.

2. A material according to claim 1 wherein the filler content ranges from 5 wt% to in excess of 50 wt%.

3. A material according to either claim 1 or claim 2 wherein the platelet type filler comprises at least one of talc, graphite and any other plate type lubricant filler material.

4. A material according to any one preceding claim wherein in addition to the platelet mineral filler also includes further reinforcements therein running substantially in the circumferential direction in a spiral form.

5. A material according to claim 4 wherein the further reinforcements is at least one selected from the group comprising: metal foils; woven wire cloths; expanded meshes; textile-type materials formed from natural or plastics material fibres or yarns; other particulate fillers of a non-platelet type including metal particles.

6. A method of making a sealing material having a platelet type mineral filler therein wherein the orientation of the plane of the platelet filler is substantially parallel to a rubbing surface of said material, the method comprising the steps of making an elongate sheet or tape of PTFE, having said filler material therein, by a calendering and/or extrusion process so as to naturally orientate said platelet filler particles substantially parallel to the plane of said PTFE sheet, winding said elongate sheet into a cylindrical form and sintering said wound cylindrical form so as to produce a substantially homogeneous material.

7. A method according to claim 6 further including the step of compacting the material after winding.

8. A method according to claim 7 wherein the compacting step is by isostatic pressing.

9. A method according to any one of preceding claims 6 to 8 wherein the winding step is carried out under a reduced pressure.

10. A method according to any one of preceding claims 6 to 9 wherein the winding step also includes the addition of further reinforcing materials.

11. A method according to any one of preceding claims 6 to 10 further including the step of sintering the wound material.

12. A method according to claim 11 wherein the sintering step is carried out under vacuum.

13. A method according to claim 11 wherein the sintering step is carried out simultaneously with an isostatic compaction step.
